# FASCICULE DE BREVET EUROPEEN

(11) **EP 2 843 484 B1**
(45) Date de publication et mention de la délivrance du brevet: **26.07.2017**
(21) Numéro de dépôt: 14175707.0
(22) Date de dépôt: 04.07.2014
(51) Int. Cl.: G04D 7/00, G04B 23/00

(54) **Procédé de contrôle pour identifier un mouvement mécanique d'une montre**
Kontrollverfahren zur Identifizierung der mechanischen Bewegung einer Armbanduhr
Control method for identifying a mechanical movement of a watch

(30) Priorité: 11.07.2013 EP 13176153
(43) Date de publication de la demande: 04.03.2015
(73) Titulaire: Montres Breguet SA, 1344 L'Abbaye (CH)
(72) Inventeur: Favre, Jérôme, 2000 Neuchâtel (CH); Sarchi, Davide, 1020 Renens (CH); Karapatis, Polychronis (Nakis), 1324 Premier (CH)
(74) Mandataire: Giraud, Eric

(56) Documents cités:
- EP-A1- 2 320 282
- EP-A1- 2 579 186
- EP-A2- 2 107 437
- WO-A1-2014/009558
- WO-A1-2014/009560
- US-A- 2 782 627

## Description

L'invention concerne un procédé d'attribution et de contrôle d'un code unique d'identification acoustique d'une pièce d'horlogerie, qui comprend un mouvement mécanique. Pour ce faire, le mouvement mécanique comprend au moins un élément indicateur passif, qui est configuré de telle manière à vibrer selon une ou plusieurs composantes de fréquence de vibration bien déterminées suite à la vibration du mouvement mécanique. Grâce au procédé d'attribution et de contrôle d'un code unique d'identification acoustique de la pièce d'horlogerie ou la montre, cela permet de déterminer toute contrefaçon de ladite montre.

L'invention concerne également un mouvement mécanique muni d'un élément indicateur passif pour la mise en oeuvre du procédé de d'attribution et de contrôle d'un code unique d'identification acoustique d'une pièce d'horlogerie.

Dans le cadre d'une pièce d'horlogerie, telle qu'une montre mécanique, une signature acoustique ou empreinte acoustique consiste à étudier les bruits générés par l'échappement. Pour réaliser ce type de mesure, il suffit de positionner la montre emboîtée sur un posage toujours identique et d'enregistrer le son émis au cours du temps par un microphone aérien ou de contact. Le signal temporel est ensuite analysé pour détecter l'occurrence des chocs et des frottements. Ces mesures sont réalisées pour contrôler les performances chronométriques du mouvement mécanique et identifier des défauts de fonctionnement. Il existe des appareils commerciaux, qui réalisent automatiquement ce type de mesure. Ils sont par exemple produits par l'entreprise Witschi Electronic AG.

On connaît le document US2782627 dans lequel une mesure acoustique est utilisée pour déterminer la marche d'une montre. A notre connaissance, de telles mesures n'ont jamais été adaptées et exploitées pour détecter toute contrefaçon de la pièce d'horlogerie. La raison est que l'analyse ne prend généralement pas en compte le contenu fréquentiel spécifique du bruit généré. De plus selon les différents systèmes de mesure des bruits générés par le mouvement mécanique d'une montre, il s'avère difficile d'extraire des comportements, qui se répètent, pour différents mouvements mécaniques de conception parfaitement identique. Il est à noter que le simple fait de déboîter et remboîter le même mouvement mécanique de la boîte de montre est susceptible de modifier certaines caractéristiques, tel que le niveau crête dû aux chocs. La position d'un microphone de contact ou aérien peut être également une source de fortes variations sur des indicateurs basiques de signature acoustique. Cela ne permet pas de différencier chaque montre testée de manière à précisément l'identifier, ni comme calibre spécifique, ni comme pièce spécifique.

Les documents WO 2014/009560 et WO 2014/009558 ont été publiés après la date de priorité de la présente demande. Ils sont donc des documents pertinents au sens de l'article 54(3) CBE. Ces documents décrivent l'utilisation d'une signature acoustique pour la définition d'un code unique d'identification pour un mouvement horloger.

L'invention a pour but de pallier aux inconvénients de l'état de la technique en fournissant un dispositif pour le contrôle de l'identité d'une pièce d'horlogerie à mouvement mécanique, qui permet de facilement détecter l'authenticité de ladite pièce d'horlogerie au moyen d'un système de mesure temporelle et fréquentielle des bruits générés par le mouvement mécanique. Ce dispositif indicateur passif n'affecte pas le fonctionnement du mouvement.

A cet effet, l'invention concerne un procédé d'attribution et de contrôle d'un code unique d'identification acoustique d'une pièce d'horlogerie, qui comprend les caractéristiques définies dans la revendication indépendante 1.

Des étapes particulières du procédé sont définies dans les revendications dépendante 2 et 3.

A cet effet, l'invention concerne également un mouvement mécanique muni d'un élément indicateur passif pour la mise en oeuvre du procédé d'attribution et de contrôle d'un code unique d'identification acoustique d'une pièce d'horlogerie, qui comprend les caractéristiques définies dans la revendication indépendante 4.

Des formes d'exécution du mouvement mécanique sont définies dans les revendications dépendantes 5 à 25.

Un avantage du mouvement mécanique réside dans le fait que, grâce à un élément indicateur passif fixé sur une partie du mouvement mécanique de la pièce d'horlogerie, il est facile de caractériser les paramètres vibratoires, qui sont notamment la fréquence et l'amortissement suite à la vibration générée dudit élément indicateur passif. Il est donc possible d'associer ces paramètres vibratoires spécifiques à une pièce d'horlogerie particulière au moment d'un contrôle final de ladite pièce d'horlogerie avant sa livraison. Ainsi l'élément indicateur passif à la vibration identifiable de la pièce d'horlogerie permet d'authentifier, c'est-à-dire identifier précisément ladite pièce d'horlogerie, afin d'éviter toute contrefaçon. Un faussaire devrait avoir un accès physique à chaque montre, ou à la base de données dans la fabrique pour pouvoir effectuer une contrefaçon, afin d'obtenir la corrélation entre le numéro de série de la pièce et sa signature acoustique. Cependant même en étant informé de cela, cela s'avère très difficile, voire impossible de réaliser un élément vibrant avec 3 à 4 modes, dont les fréquences sont connues à 4 chiffres significatifs.

Avantageusement avec un élément vibratoire spécifique à la pièce d'horlogerie, il est possible de mesurer plusieurs modes de vibration, qui sont bien séparés en fréquence. Il est donc simple de signer acoustiquement de manière unique et individuelle un très grand nombre de pièces d'horlogerie. Tout client peut vérifier l'identité ou l'authenticité de sa pièce d'horlogerie, telle que sa montre, en envoyant par exemple un enregistrement acoustique de sa pièce d'horlogerie à l'entreprise l'ayant fabriquée. Cet enregistrement acoustique permet d'analyser la signature acoustique, qui peut en valider la corrélation avec le numéro d'identification de la pièce horlogère. Des applications pour téléphones portables pourraient aussi être conçues et exploitées pour permettre le contrôle automatique du client par connexion au site internet de la fabrique.

Avantageusement l'élément indicateur passif vibrant est une lame ou lamelle ajoutée au mouvement mécanique, qui permet de définir une signature acoustique basée sur la fréquence de vibration de ladite lamelle. Cette lamelle peut être fixée par exemple sur le coq ou pont du balancier d'un organe réglant, qui peut être un échappement. La ou les lamelles sont disposées en des positions du mouvement mécanique de manière à ne pas influencer les performances de la pièce d'horlogerie.

Avantageusement il peut être fixé deux lamelles, chacune respectivement sur une structure fixe de deux tourbillons, que la pièce d'horlogerie peut comprendre. Chaque lamelle fixée à un tourbillon correspondant, peut définir une signature acoustique spécifique en fonction de l'analyse des fréquences de vibration par un système de mesure à microphone.

Les buts, avantages et caractéristiques du procédé d'attribution et de contrôle d'un code unique d'identification acoustique d'une pièce d'horlogerie, et du mouvement mécanique pour sa mise en oeuvre apparaîtront mieux dans la description suivante notamment en regard des dessins sur lesquels :
la figure 1 représente une vue tridimensionnelle d'une forme d'exécution du mouvement mécanique avec l'élément indicateur passif pour le contrôle de la pièce d'horlogerie selon l'invention,
les figures 2a et 2b représentent des graphiques temporels de signaux acoustiques (pression acoustique absolue), qui sont générés par le mouvement mécanique d'une part pour un échappement standard, et d'autre part pour un échappement, qui est équipé du dispositif de contrôle, tel qu'une lamelle vibratoire dédicacée selon l'invention, et
la figure 3 représente un graphique fréquentiel montrant l'effet de l'élément indicateur passif selon l'invention sur la signature acoustique de la pièce d'horlogerie en comparaison aux bruits générés par le mouvement mécanique.

Dans la description suivante, toutes les parties du mouvement mécanique d'une pièce d'horlogerie, sur lequel est disposé le dispositif de contrôle sous forme d'élément indicateur passif, ne seront décrites que sommairement. La description suivante fait référence principalement au type de dispositif de contrôle, à sa forme et à son emplacement dans le mouvement mécanique pour la mise en oeuvre du procédé d'attribution et de contrôle d'un code unique d'identification acoustique.

Il est à noter qu'on entendu par authenticité de la montre, l'identité propre de chaque montre. Chaque pièce d'horlogerie ou montre peut être identifiable notamment par son numéro ou code unique d'identification, dans le but d'éviter toute contrefaçon.

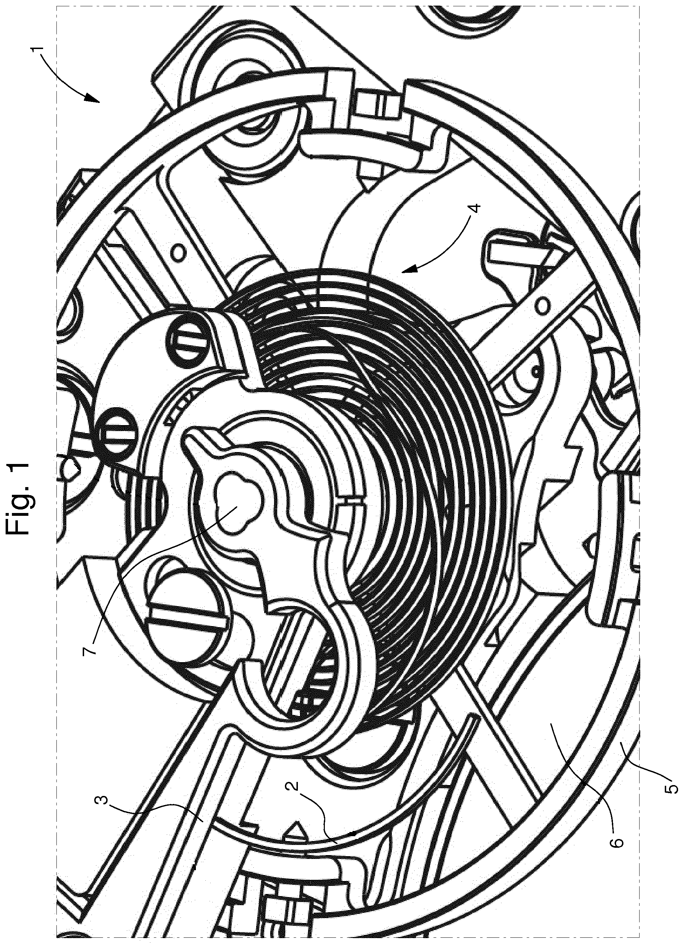

La figure 1 représente une vue tridimensionnelle partielle d'un mouvement mécanique 1 d'une pièce d'horlogerie, telle qu'une montre. Il est représenté principalement un organe réglant 4 du mouvement mécanique avec un balancier spiral 5 monté rotatif sur une platine 6. Cet organe réglant 4 peut être une partie d'un échappement. Le balancier spiral 5 tourne en alternance autour d'une tige axiale 7 maintenue libre de rotation entre la platine 6 et un coq ou pont de balancier 3.

Le dispositif de contrôle pour permettre d'authentifier ou de contrôler l'identité d'une pièce d'horlogerie comprend un élément indicateur passif 2 fixé à une partie fixe de support d'un organe réglant du mouvement mécanique de la pièce d'horlogerie. Cet élément indicateur passif est configuré de telle manière à vibrer selon une ou plusieurs composantes de fréquence de vibration bien déterminées suite aux chocs du mouvement mécanique. L'amplitude de vibration de l'élément indicateur est de préférence au moins 10 fois supérieure à l'amplitude de vibration de la partie fixe de support. Comme ces composantes de fréquence sont dans une gamme de fréquences audibles entre 800 Hz et 20'000 Hz, et comme la fréquence fondamentale (la plus basse et la plus activée) est en dehors de l'intervalle de fréquences du bruit des chocs de mobiles d'échappement, il est possible de bien capter les bruits acoustiques générés par l'élément passif vibrant par un microphone de contact ou aérien d'un système de mesure susmentionné. La fréquence fondamentale peut se situer de préférence entre 800 Hz et 4'000 Hz. Ces composantes de fréquence de vibration de l'élément passif vibrant 2 sont susceptibles d'identifier précisément la pièce d'horlogerie, telle que la montre mécanique.

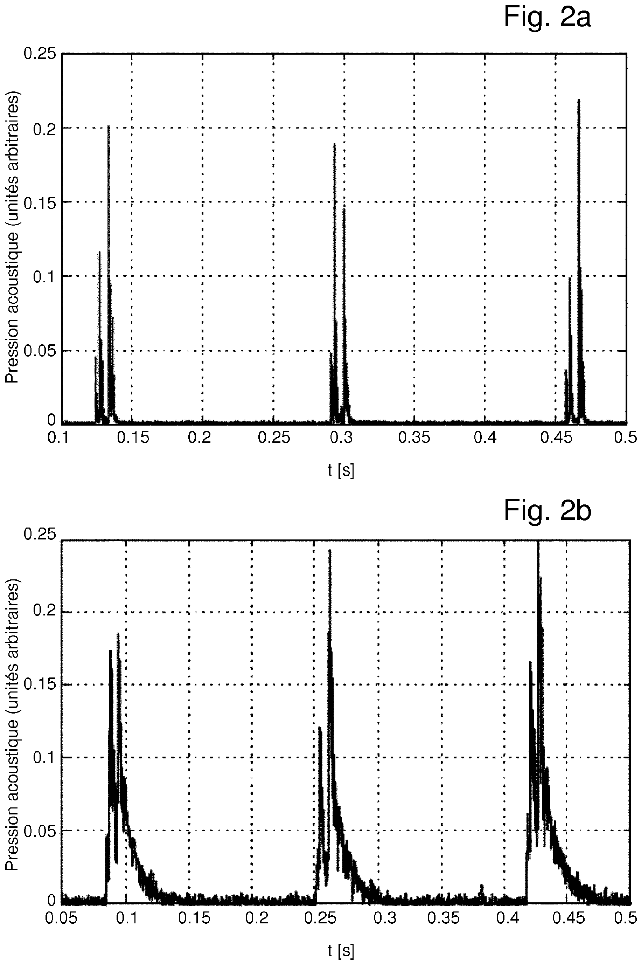

L'élément indicateur passif affecte principalement le contenu fréquentiel du signal, alors que son influence sur la forme temporelle est faible. Une comparaison est représentée aux figures 2a et 2b. La seule différence est qu'en présence d'un indicateur, le signal a un amortissement légèrement plus faible. La capacité de détection des chocs de mobiles d'échappement n'est donc pas affectée par la présence de l'indicateur, ce qui garantit de pouvoir mesurer la chronométrie de la montre en utilisant les appareils standard du commerce.

L'élément indicateur passif 2 est une lame ou lamelle, ou une plaque fixée à une partie fixe de support de l'organe réglant 4 du mouvement mécanique. La lame ou lamelle peut avoir une section transversale rectangulaire ou elliptique. Par exemple, cette lame 2 est fixée à une de ses extrémités au coq ou pont de balancier 3, alors que l'autre extrémité de la lame est libre de mouvement. La lame peut être disposée au-dessus du balancier spiral 5 et parallèlement au plan défini par la roue du balancier spiral. En fonction de l'encombrement disponible, la lame peut aussi être disposée dans une direction orthogonale au plan du mouvement. La lame peut être droite ou configurée pour décrire une portion de cercle, qui peut être par exemple centrée sur l'axe de rotation 7 du balancier spiral 5.

Comme cette lame est fixée au coq ou pont du balancier, elle n'influence pas les performances du mouvement mécanique de la pièce d'horlogerie. La vibration de cette lame est ainsi indépendante de l'emboîtage du mouvement mécanique. Cette lame est bien configurée spécifiquement pour chaque pièce d'horlogerie à authentifier précisément par mesure des fréquences de vibration de cette lame.

Différentes formes de fixation de l'élément indicateur passif sous la forme d'une lame ou plaque peuvent être envisagées. Comme indiqué ci-devant, la lame peut être droite ou courbe avec un encastrement simple ou double ou à encastrement-appui au coq ou pont de balancier. Dans le cas d'un élément passif sous la forme d'une plaque ou plaquette, la plaque peut être rectangulaire ou quasi-rectangulaire avec un encastrement simple ou double ou triple ou complet avec les quatre côtés fixés au coq ou pont de balancier.

L'élément indicateur passif 2 peut être réalisé par exemple dans un matériau métallique, tel que de l'acier. Cet élément indicateur passif, sous forme de lame, peut être soudé ou brasé ou vissé à une partie fixe de support de l'organe réglant du mouvement mécanique, par exemple au coq 3 ou pont du balancier spiral. Ses trois dimensions, telles que la largeur, l'épaisseur et la longueur, doivent en principe être comprises entre 0.1 mm et 5 mm, voire 10 mm. Selon une réalisation préférentielle, sa fréquence fondamentale doit être comprise entre 1 kHz et 4 kHz.

L'élément indicateur passif peut également venir de matière avec le coq 3 pour former une pièce monobloc, et prévoir des points d'usinage spécifiques par exemple des pointes, des creux, des micro-bras ou autres. Les parties usinées de l'élément indicateur passif peuvent être effectuées avant emboîtage pour définir son contenu fréquentiel de vibration spécifique, qui identifie la pièce d'horlogerie, afin d'éviter toute contrefaçon. Les fréquences de vibration de la lame configurée spécifiquement à la pièce d'horlogerie à authentifier, peuvent être bien connues et définies sur plusieurs chiffres significatifs par exemple 4 ou 5 chiffres.

Principalement, en coopération avec le balancier 5, l'organe réglant 4, qui comprend l'ancre et la roue non représentées, génère des vibrations lors de son fonctionnement. Ces vibrations sont transmises sur la platine et sur le coq ou pont de balancier 3, afin de faire vibrer ledit élément indicateur passif. Les bruits acoustiques, générés par les chocs entre le balancier et l'ancre, et l'ancre et la roue d'échappement, sont des bruits de tic et tac connus de tout mouvement mécanique d'une montre. Cet élément indicateur passif 2 peut avantageusement vibrer dans une gamme de fréquences audibles entre 100 Hz et 20 kHz. De plus, dans la configuration de l'élément passif 2 représentée à la figure 1, des tests ont montré, que la tenue aux chocs d'une telle construction est garantie jusqu'à 5'000 g.

Il est à noter que l'élément passif peut également être une plaque ou n'importe quel système passif pouvant vibrer, qui est intégré dans une boîte de montre. De préférence, cet élément passif est composé d'un métal ou d'un alliage d'au moins deux métaux ou également d'un métal amorphe ou verre métallique. L'élément passif métallique en vibration fournit une signature acoustique d'authentification ou d'identification de la pièce d'horlogerie susceptible d'être captée par un microphone de contact ou aérien d'un système de mesure. Chaque pièce d'horlogerie, notamment chaque mouvement mécanique d'une telle pièce d'horlogerie peut être identifiable de manière unique par la configuration de l'élément passif différent pour chaque mouvement mécanique réalisé.

Différents autres types de matériau peuvent être envisagés pour réaliser l'élément passif sous la forme par exemple d'une lame. Les matériaux utilisés doivent avoir une faible dépendance de la température et de préférence auto-compensés thermiquement. La variation du module de Young et de la densité doit compenser l'élongation-contraction géométrique, et être aussi résistante à l'oxydation naturelle. Toutefois, ces critères ne sont pas exclusifs. Il peut être choisi comme matériau, un métal précieux, de la céramique, du saphir, du quartz ou du silicium. Il peut aussi être utilisé deux matériaux pour permettre l'auto-compensation thermique, notamment en utilisant du silicium avec une couche d'oxyde de silicium ou deux métaux. L'utilisation d'un ou plusieurs matériaux magnétostrictifs aurait l'avantage additionnel de permettre le simple diagnostic d'aimantation d'un mouvement déréglé. L'élément passif peut aussi être réalisé dans un ou plusieurs matériaux paramagnétiques avec une perméabilité magnétique inférieure à 1.01.

A titre illustratif, il est possible de remarquer la différence de bruits acoustiques générés par le mouvement mécanique pour un échappement standard sans dispositif de contrôle à la figure 2a, et pour un échappement muni du dispositif de contrôle, tel qu'une lame passive mise en vibration par les bruits générés par le mouvement mécanique à la figure 2b. Le contenu fréquentiel, c'est-à-dire un des paramètres de la signature acoustique, peut être analysé par un système de mesure à microphone de contact ou aérien. Grâce au dispositif de contrôle de la présente invention, il est possible d'avoir des comportements indépendants des conditions de mesure, dont l'émergence et le rapport signal/bruit sont élevés, pour des mouvements de conception identique. Ceci n'était pas le cas pour des mouvements mécaniques de l'état de la technique.

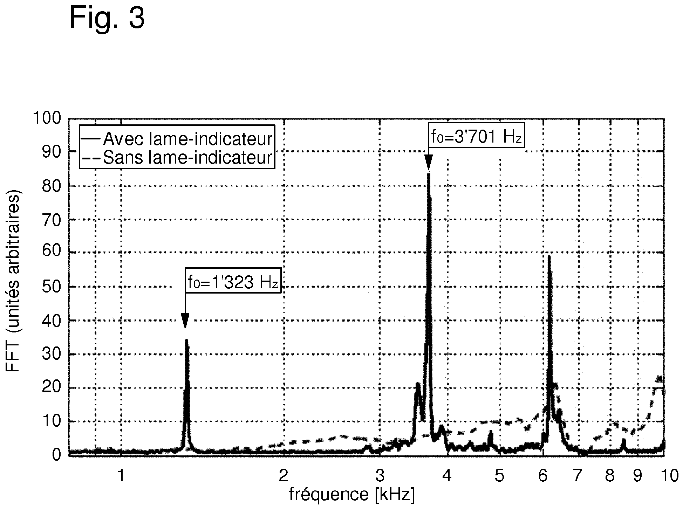

A titre d'exemple non limitatif avec une lame spécifiquement configurée et fixée à une partie fixe du mouvement mécanique, la figure 3 représente un graphique fréquentiel des bruits acoustiques générés lors du fonctionnement du mouvement mécanique. Il est possible de constater l'effet du dispositif de contrôle selon l'invention sur la signature acoustique de la pièce d'horlogerie en comparaison aux bruits traditionnels générés par le mouvement mécanique. Avec une lame passive fixée à la partie fixe du mouvement mécanique, on peut observer un premier mode de vibration de la lame par exemple à 1'323 Hz, le second mode de vibration à 3'534 Hz, le troisième mode de vibration à 3'701 Hz et le quatrième mode de vibration à 6'171 Hz. Ces bruits acoustiques générés principalement par la lame passive en vibration peuvent être mesurés précisément par un système de mesure de manière à authentifier précisément la pièce d'horlogerie.

Pour le procédé, le contrôle d'un code unique d'identification acoustique d'une pièce d'horlogerie peut être effectué par l'intermédiaire d'un téléphone portable.

Le procédé d'attribution et de contrôle dudit code d'identification de la pièce d'horlogerie peut également comprendre différentes étapes avant la mise en fonction du mouvement mécanique et la génération de la vibration de l'élément indicateur passif. Tout d'abord, l'élément indicateur passif est fixé à une partie fixe de support de l'organe réglant du mouvement mécanique avant de fermer une boîte de la pièce d'horlogerie, qui comprend ledit mouvement mécanique. Avant livraison de la pièce d'horlogerie, une détermination initiale du code d'identification de la pièce d'horlogerie est effectuée par une mesure acoustique des fréquences de vibration de l'élément indicateur passif. Une attribution du code d'identification à un numéro de série du mouvement mécanique est effectuée, et le code d'identification avec le numéro de série sont enregistrés dans une base de données et dans un certificat de produit associé à la pièce d'horlogerie.

Après la livraison de la pièce d'horlogerie et après la mise en fonction du mouvement mécanique et la génération de la vibration de l'élément indicateur passif, le code d'identification de la pièce d'horlogerie est contrôlé. Ce contrôle consiste à effectuer une mesure acoustique des fréquences de vibration de l'élément indicateur passif tout en comparant le code d'identification déterminé au code attribué initialement à la pièce d'horlogerie.

A partir de la description qui vient d'être faite, plusieurs variantes du mouvement mécanique muni du dispositif de contrôle pour la mise en oeuvre du procédé d'attribution et de contrôle d'un code unique d'identification acoustique d'une pièce d'horlogerie peuvent être conçues par l'homme du métier sans sortir du cadre de l'invention définie par les revendications. Dans le cas d'une pièce d'horlogerie à double tourbillon, c'est-à-dire avec deux échappements, il est possible de fixer à une partie fixe de chaque échappement une lame passive configurée spécifiquement pour chaque échappement. Ceci permet de déterminer le code d'identification de la pièce d'horlogerie par une mesure acoustique des fréquences de vibration de chaque élément indicateur passif. Les modes propres de vibration de chaque lame passive des deux tourbillons peuvent être différents pour augmenter la précision d'authentification de la pièce d'horlogerie. Il aurait pu être imaginé d'intégrer dans tout appareil mécanique ou électronique, un tel dispositif de contrôle mis en vibration par des composants de l'appareil, afin d'assurer une authentification de l'appareil le comprenant. Il peut être prévu que l'élément indicateur passif vibre en dehors de la gamme de fréquences audibles selon un ou plusieurs modes de vibration induits par le mouvement mécanique.

## Revendications

1. Procédé d'attribution et de contrôle d'un code unique d'identification acoustique d'une pièce d'horlogerie, qui comprend un mouvement mécanique (1) muni d'au moins un élément indicateur passif (2), qui est une lame ou lamelle ou plaque fixée à une partie fixe de support (3) d'un organe réglant (4) du mouvement mécanique, et qui est configuré de telle manière à vibrer selon une ou plusieurs composantes de fréquence de vibration bien déterminées définissant le code unique d'identification suite à la vibration du mouvement mécanique, **caractérisé en ce que** le procédé comprend des étapes de :
- mettre en fonction le mouvement mécanique pour induire des chocs de mobiles d'échappement,
- générer une vibration de l'élément indicateur passif par la vibration du mouvement mécanique, afin de définir une signature acoustique selon la ou les composantes de fréquence de vibration, spécifique à la pièce d'horlogerie, et
- contrôler le code d'identification de la pièce d'horlogerie par une mesure acoustique des fréquences de vibration de l'élément indicateur passif (2).

2. Procédé selon la revendication 1, **caractérisé en ce que** le contrôle du code d'identification de la pièce d'horlogerie peut être effectué par l'intermédiaire d'un téléphone portable.

3. Procédé selon la revendication 1, **caractérisé en ce que** le procédé comprend des étapes de :
- fixer l'élément indicateur passif (2) à une partie fixe de support (3) du mouvement mécanique avant de fermer une boîte de la pièce d'horlogerie, qui comprend ledit mouvement mécanique,
- déterminer initialement le code d'identification par une mesure acoustique des fréquences de vibration de l'élément indicateur passif (2),
- attribuer le code d'identification à un numéro de série du mouvement mécanique et enregistrer le code d'identification et le numéro de série dans une base de données et dans un certificat de produit associé à la pièce d'horlogerie, et
- après la mise en fonction du mouvement mécanique et la génération de la vibration de l'élément indicateur passif, contrôler le code d'identification de la pièce d'horlogerie par une mesure acoustique des fréquences de vibration de l'élément indicateur passif et en le comparant au code attribué initialement à la pièce d'horlogerie.

4. Mouvement mécanique (1) muni d'un élément indicateur passif (2) pour la mise en oeuvre du procédé d'attribution et de contrôle d'un code unique d'identification acoustique d'une pièce d'horlogerie selon la revendication 1, **caractérisé en ce que** l'élément indicateur passif est une lame ou lamelle (2) ou une plaque, qui est fixée à une partie fixe de support (3) d'un organe réglant (4) du mouvement mécanique, ladite lame ou lamelle ou plaque étant configurée de telle manière à vibrer selon une ou plusieurs composantes de fréquence de vibration bien déterminées suite aux chocs du mouvement mécanique pour définir le code unique d'identification par la signature acoustique générée.

5. Mouvement mécanique (1) selon la revendication 4, **caractérisé en ce que** l'élément indicateur passif est une lame ou lamelle (2) ayant une section transversale rectangulaire.

6. Mouvement mécanique (1) selon la revendication 4, **caractérisé en ce que** l'élément indicateur passif est une lame ou lamelle (2) ayant une section transversale elliptique.

7. Mouvement mécanique (1) selon la revendication 4, **caractérisé en ce que** l'élément indicateur passif est une lame ou lamelle (2) droite, dont une des extrémités est fixée à ladite partie fixe de support (3) d'un organe réglant (4) du mouvement mécanique et une autre extrémité est libre de mouvement.

8. Mouvement mécanique (1) selon la revendication 4, **caractérisé en ce que** l'élément indicateur passif est une lame ou lamelle (2) droite, dont les deux extrémités sont fixées à ladite partie fixe de support (3) d'un organe réglant (4) du mouvement mécanique.

9. Mouvement mécanique (1) selon la revendication 4, **caractérisé en ce que** l'élément indicateur passif est une lame ou lamelle (2) courbe, dont une des extrémités est fixée à ladite partie fixe de support (3) d'un organe réglant (4) du mouvement mécanique et une autre extrémité est libre de mouvement.

10. Mouvement mécanique (1) selon la revendication 4, **caractérisé en ce que** l'élément indicateur passif est une lame ou lamelle (2) courbe, dont les deux extrémités sont fixées à ladite partie fixe de support (3) d'un organe réglant (4) du mouvement mécanique.

11. Mouvement mécanique (1) selon la revendication 4, **caractérisé en ce que** l'élément indicateur passif (2) est fixé sur un coq ou pont de balancier (3), qui constitue la partie fixe de support du mouvement mécanique.

12. Mouvement mécanique (1) selon la revendication 11, **caractérisé en ce que** l'élément indicateur passif (2) est réalisé dans un matériau métallique et est soudé ou brasé sur le coq ou pont de balancier (3).

13. Mouvement mécanique (1) selon la revendication 11, **caractérisé en ce que** l'élément indicateur passif (2) est réalisé dans un matériau métallique, et **en ce que** l'élément indicateur passif (2) vient de matière avec le coq ou pont de balancier (3) et est usiné pour définir une ou plusieurs fréquences de vibration bien déterminées.

14. Mouvement mécanique (1) selon la revendication 4, **caractérisé en ce que** l'élément indicateur passif (2) est une lame ou lamelle disposée parallèlement à un plan défini par une roue (5) d'un balancier spiral de l'organe réglant.

15. Mouvement mécanique (1) selon la revendication 14, **caractérisé en ce que** la lame ou lamelle définit une portion de cercle centrée par rapport à un axe de rotation (7) du balancier spiral (5).

16. Mouvement mécanique (1) selon la revendication 4, **caractérisé en ce que** l'élément indicateur passif (2) est composé d'un métal ou d'un alliage d'au moins deux métaux ou d'un métal amorphe ou verre métallique.

17. Mouvement mécanique (1) selon la revendication 16, **caractérisé en ce que** l'élément indicateur passif (2) est réalisé en acier.

18. Mouvement mécanique (1) selon la revendication 16, **caractérisé en ce que** l'élément indicateur passif (2) est réalisé en métal précieux.

19. Mouvement mécanique (1) selon la revendication 4, **caractérisé en ce qu'**il comprend deux éléments passifs, un premier élément indicateur passif étant fixé à une partie fixe de support d'un premier organe réglant du mouvement mécanique, et un second élément indicateur passif étant fixé à une partie fixe de support d'un second organe réglant du mouvement mécanique.

20. Mouvement mécanique (1) selon la revendication 19, **caractérisé en ce que** les premier et second éléments indicateurs passifs sont configurés différemment l'un de l'autre avec des composantes différentes de fréquence de vibration pour définir une signature acoustique spécifique de la pièce d'horlogerie.

21. Mouvement mécanique (1) selon la revendication 4, **caractérisé en ce que** l'élément indicateur passif (2) est réalisé en céramique.

22. Mouvement mécanique (1) selon la revendication 4, **caractérisé en ce que** l'élément indicateur passif (2) est réalisé dans un ou plusieurs matériaux paramagnétiques avec perméabilité magnétique inférieure à 1.01.

23. Mouvement mécanique (1) selon la revendication 4, **caractérisé en ce que** l'élément indicateur passif (2) est réalisé dans un ou plusieurs matériaux magnétostrictifs.

24. Mouvement mécanique (1) selon la revendication 4, **caractérisé en ce que** l'élément indicateur passif (2) est réalisé dans un matériau ayant une faible dépendance de la température.

25. Mouvement mécanique (1) selon la revendication 24, **caractérisé en ce que** l'élément indicateur passif (2) est réalisé dans un matériau auto-compensé thermiquement.

## Patentansprüche

1. Verfahren zum Zuordnen und Kontrollieren eines eindeutigen akustischen Kennungscodes eines Zeitmessgeräts, das ein mechanisches Werk (1) umfasst, das mit mindestens einem passiven Anzeigerelement (2) versehen ist, das ein Plättchen oder eine Lamelle oder eine Platte ist, das/die an einem festen Tragteil (3) eines Regulierorgans (4) des mechanischen Werks befestigt ist, und das/die so konfiguriert ist, dass es/sie bei einer oder mehreren genau bestimmten Vibrationsfrequenzkomponenten vibriert, die den eindeutigen Kennungscode infolge der Vibration des mechanischen Werks definieren, **dadurch gekennzeichnet, dass** das Verfahren die Schritte umfasst:
- Ingangsetzen des mechanischen Werks, um Stöße von Hemmungsdrehteilen hervorzurufen,
- Erzeugen einer Vibration des passiven Anzeigerelements durch Vibration des mechanischen Werks, um eine akustische Signatur gemäß der einen oder den mehreren Vibrationsfrequenzkomponenten, die für das Zeitmessgerät spezifisch sind, zu definieren, und
- Kontrollieren des Kennungscodes des Zeitmessgeräts durch akustische Messung der Vibrationsfrequenzen des passiven Anzeigerelements (2).

2. Verfahren nach Anspruch 1, **dadurch gekennzeichnet, dass** die Kontrolle des Kennungscodes des Zeitmessgeräts über ein tragbares Telefon ausführbar ist.

3. Verfahren nach Anspruch 1, **dadurch gekennzeichnet, dass** das Verfahren die Schritte umfasst:
- Befestigen des passiven Anzeigerelements (2) an einem festen Tragteil (3) des mechanischen Werks, bevor ein Gehäuse des Zeitmessgeräts, das das mechanische Werk enthält, geschlossen wird,
- anfängliches Bestimmen des Kennungscodes durch eine akustische Messung der Vibrationsfrequenzen des passiven Anzeigerelements (2),
- Zuordnen des Kennungscodes zu einer Seriennummer des mechanischen Werks und Aufzeichnen des Kennungscodes und der Seriennummer in einer Datenbank und in einem Produktzertifikat, das dem Zeitmessgerät zugeordnet ist, und
- nach Ingangsetzen des mechanischen Werks und dem Erzeugen der Vibration des passiven Anzeigerelements Kontrollieren des Kennungscodes des Zeitmessgeräts durch eine akustische Messung der Vibrationsfrequenzen des passiven Anzeigerelements und durch Vergleichen des anfänglich dem Zeitmessgerät zugeordneten Codes mit dem Kennungscode.

4. Mechanisches Werk (1), das mit einem passiven Anzeigerelement (2) versehen ist, um das Verfahren zum Zuordnen und Kontrollieren eines eindeutigen akustischen Kennungscodes eines Zeitmessgeräts nach Anspruch 1 auszuführen, **dadurch gekennzeichnet, dass** das passive Anzeigerelement ein Plättchen oder eine Lamelle (2) oder eine Platte ist, das/die an einem festen Tragteil (3) eines Regulierorgans (4) des mechanischen Werks befestigt ist, wobei das Plättchen oder die Lamelle oder die Platte in einer Weise konfiguriert ist, dass es/sie als Folge von Stößen des mechanischen Werks gemäß einer oder mehreren genau bestimmten Vibrationsfrequenzkomponenten vibriert, um den eindeutigen Kennungscode durch die erzeugte akustische Signatur zu definieren.

5. Mechanisches Werk (1) nach Anspruch 4, **dadurch gekennzeichnet, dass** das passive Anzeigerelement ein Plättchen oder eine Lamelle (2) ist, das/die einen rechteckigen Querschnitt hat.

6. Mechanisches Werk (1) nach Anspruch 4, **dadurch gekennzeichnet, dass** das passive Anzeigerelement ein Plättchen oder eine Lamelle (2) ist, das/die einen elliptischen Querschnitt hat.

7. Mechanisches Werk (1) nach Anspruch 4, **dadurch gekennzeichnet, dass** das passive Anzeigerelement ein geradliniges Plättchen oder eine geradlinige Lamelle (2) ist, von dessen Enden eines an dem festen Tragteil (3) eines Regulierorgans (4) des mechanischen Werks befestigt ist und ein anderes Ende frei beweglich ist.

8. Mechanisches Werk (1) nach Anspruch 4, **dadurch gekennzeichnet, dass** das passive Anzeigerelement ein geradliniges Plättchen oder eine geradlinige Lamelle (2) ist, wovon beide Enden an dem festen Tragteil (3) eines Regulierorgans (4) des mechanischen Werks befestigt sind.

9. Mechanisches Werk (1) nach Anspruch 4, **dadurch gekennzeichnet, dass** das passive Anzeigerelement ein gekrümmtes Plättchen oder eine gekrümmte Lamelle (2) ist, wovon eines der Enden an dem festen Tragteil (3) eines Regulierorgans (4) des mechanischen Werks befestigt ist und das andere Ende frei beweglich ist.

10. Mechanisches Werk (1) nach Anspruch 4, **dadurch gekennzeichnet, dass** das passive Anzeigerelement ein gekrümmtes Plättchen oder eine gekrümmte Lamelle (2) ist, wovon beide Enden an dem festen Tragteil (3) eines Regulierorgans (4) des mechanischen Werks befestigt sind.

11. Mechanisches Werk (1) nach Anspruch 4, **dadurch gekennzeichnet, dass** das passive Anzeigerelement (2) an einem Unruhkloben oder einer Unruhbrücke (3) befestigt ist, der/die den festen Tragteil des mechanischen Werks bildet.

12. Mechanisches Werk (1) nach Anspruch 11, **dadurch gekennzeichnet, dass** das passive Anzeigerelement (2) aus einem metallischen Material hergestellt ist und an den Unruhkloben oder die Unruhbrücke (3) geschweißt oder gelötet ist.

13. Mechanisches Werk (1) nach Anspruch 11, **dadurch gekennzeichnet, dass** das passive Anzeigerelement (2) aus einem metallischen Material hergestellt ist und dass das passive Anzeigerelement (2) einteilig mit dem Unruhkloben oder der Unruhbrücke (3) ausgebildet ist und bearbeitet ist, um eine oder mehrere genau bestimmte Vibrationsfrequenzen zu definieren.

14. Mechanisches Werk (1) nach Anspruch 4, **dadurch gekennzeichnet, dass** das passive Anzeigerelement (2) ein Plättchen oder eine Lamelle ist, das/die parallel zu einer durch ein Rad (5) einer Unruh-Spiralfeder des Regulierorgans definierten Ebene angeordnet ist.

15. Mechanisches Werk (1) nach Anspruch 14, **dadurch gekennzeichnet, dass** das Plättchen oder die Lamelle einen Kreisabschnitt definiert, der auf eine Drehachse (7) der Unruh-Spiralfeder (5) zentriert ist.

16. Mechanisches Werk (1) nach Anspruch 4, **dadurch gekennzeichnet, dass** das passive Anzeigerelement (2) aus Metall oder einer Legierung aus mindestens zwei Metallen oder aus einem amorphen Metall und einem metallischen Glas zusammengesetzt ist.

17. Mechanisches Werk (1) nach Anspruch 16, **dadurch gekennzeichnet, dass** das passive Anzeigerelement (2) aus Stahl hergestellt ist.

18. Mechanisches Werk (1) nach Anspruch 16, **dadurch gekennzeichnet, dass** das passive Anzeigerelement (2) aus Edelmetall hergestellt ist.

19. Mechanisches Werk (1) nach Anspruch 4, **dadurch gekennzeichnet, dass** es zwei passive Elemente umfasst, wobei ein erstes passives Anzeigerelement an einem festen Tragteil eines ersten Regulierorgans des mechanischen Werks befestigt ist und ein zweites passives Anzeigerelement an einem festen Tragteil eines zweiten Regulierorgans des mechanischen Werks befestigt ist.

20. Mechanisches Werk (1) nach Anspruch 19, **dadurch gekennzeichnet, dass** das erste und das zweite passive Anzeigerelement voneinander verschieden konfiguriert sind mit unterschiedlichen Vibrationsfrequenzkomponenten, um eine spezifische akustische Signatur des Zeitmessgeräts zu definieren.

21. Mechanisches Werk (1) nach Anspruch 4, **dadurch gekennzeichnet, dass** das passive Anzeigerelement (2) aus Keramik hergestellt ist.

22. Mechanisches Werk (1) nach Anspruch 4, **dadurch gekennzeichnet, dass** das passive Anzeigerelement (2) aus einem oder mehreren paramagnetischen Materialien hergestellt ist, deren magnetische Permeabilität kleiner als 1,01 ist.

23. Mechanisches Werk (1) nach Anspruch 4, **dadurch gekennzeichnet, dass** das passive Anzeigerelement (2) aus einem oder mehreren magnetostriktiven Materialien hergestellt ist.

24. Mechanisches Werk (1) nach Anspruch 4, **dadurch gekennzeichnet, dass** das passive Anzeigerelement (2) aus einem Material hergestellt ist, das eine geringe Temperaturabhängigkeit hat.

25. Mechanisches Werk (1) nach Anspruch 24, **dadurch gekennzeichnet, dass** das passive Anzeigerelement (2) aus einem thermisch autokompensierten Material hergestellt ist.

## Claims

1. Method for allocating and for checking a unique code of acoustic identification of a timepiece, which includes a mechanical movement (1) provided with at least one passive indicator element (2), which is a strip or blade or a plate fixed to a fixed support portion (3) of a regulating member (4) of the mechanical movement, and which is configured to vibrate according to one or more clearly defined vibration frequency components defining the unique code of identification following the vibration of the mechanical movement, **characterized in that** the method includes the steps of:
- starting to operate the mechanical movement to induce shocks in the escapement wheel sets,
- generating a vibration of the passive indicator element via the vibration of the mechanical movement to define an acoustic signature according to the vibration frequency components specific to the timepiece, and
- checking the identification code of the timepiece by an acoustic measurement of vibration frequencies of the passive indicator element.

2. Method according to claim 1, **characterized in that** the checking of the identification code of the timepiece can be performed via a mobile phone.

3. Method according to claim 1, **characterized in that** the method includes the steps of :
- fixing the passive indicator element (2) to a fixed support portion (3) of the mechanical movement before closing a case of the timepiece, which includes the mechanical movement,
- initially determining the identification code by an acoustic measurement of vibration frequencies of the passive indicator element (2),
- allocating the identification code at a serial number of the mechanical movement and storing the identification code with the serial number in a database and a product certificate associated to the timepiece, and
- after starting to operate the mechanical movement and the vibration generation of the passive indicator element, checking the identification code of the timepiece by an acoustic measurement of vibration frequencies of the passive indicator element and comparing said identification code with the code initially allocated to the timepiece.

4. Mechanical movement (1) provided with a passive indicator element (2) for implementing the method for allocating and for checking a unique code of acoustic identification of a timepiece according to claim 1, **characterized in that** the passive indicator element is a strip or blade (2) or a plate fixed to a fixed support portion (3) of a regulating member (4) of the mechanical movement, said strip or blade or plate being configured to vibrate according to one or more clearly defined vibration frequency components following shocks of the mechanical movement to define the unique code of identification by the generated acoustic signature.

5. Mechanical movement (1) according to claim 4, **characterized in that** the passive indicator element is a strip or blade (2) having a rectangular cross-section.

6. Mechanical movement (1) according to claim 4, **characterized in that** the passive indicator element is a strip or blade (2) having an oval cross-section.

7. Mechanical movement (1) according to claim 4, **characterized in that** the passive indicator element is a straight strip or blade (2), one end of which is fixed to said fixed support portion (3) of a regulating member (4) of the mechanical movement and the other end of which moves freely.

8. Mechanical movement (1) according to claim 4, **characterized in that** the passive indicator element is a straight strip or blade (2), both ends of which are fixed to said fixed support portion (3) of a regulating member (4) of the mechanical movement.

9. Mechanical movement (1) according to claim 4, **characterized in that** the passive indicator element is a curved strip or blade (2), one end of which is fixed to said fixed support portion (3) of a regulating member (4) of the mechanical movement and the other end of which moves freely.

10. Mechanical movement (1) according to claim 4, **characterized in that** the passive indicator element is a curved strip or blade (2), both ends of which are fixed to said fixed support portion (3) of a regulating member (4) of the mechanical movement.

11. Mechanical movement (1) according to claim 4, **characterized in that** the passive indicator element (2) is fixed to a balance cock or bar (3) which forms the fixed support portion of the mechanical movement.

12. Mechanical movement (1) according to claim 11, **characterized in that** the passive indicator element (2) is made of a metallic material and is welded or soldered to the balance cock or bar (3).

13. Mechanical movement (1) according to claim 11, **characterized in that** the passive indicator element (2) is made of a metallic material, and **in that** the passive indicator element (2) is integral with the balance cock or bar (3) and is machined to define one or more clearly defined vibration frequencies.

14. Mechanical movement (1) according to claim 4, **characterized in that** the passive indicator element (2) is a strip or blade arranged parallel to a plane defined by a wheel (5) of a sprung balance of the regulating member.

15. Mechanical movement (1) according to claim 14, **characterized in that** the strip or blade defines a portion of a circle centred with respect to an axis of rotation (7) of the sprung balance (5).

16. Mechanical movement (1) according to claim 4, **characterized in that** the passive indicator element (2) is formed of a metal or of an alloy of at least two metals or of an amorphous metal or metallic glass.

17. Mechanical movement (1) according to claim 16, **characterized in that** the passive indicator element (2) is made of steel.

18. Mechanical movement (1) according to claim 16, **characterized in that** the passive indicator element (2) is made of precious metal.

19. Mechanical movement (1) according to claim 4, **characterized in that** the movement includes two passive indicator elements, a first passive indicator element being fixed to a fixed support portion of a first regulating member of the mechanical movement, and a second passive indicator element being fixed to a fixed support portion of a second regulating member of the mechanical movement.

20. Mechanical movement (1) according to claim 19, **characterized in that** the first and second passive indicator elements are configured differently from each other with different vibration frequency components to define a specific acoustic signature of the timepiece.

21. Mechanical movement (1) according to claim 4, **characterized in that** the passive indicator element (2) is made of ceramic.

22. Mechanical movement (1) according to claim 4, **characterized in that** the passive indicator element (2) is made of one or more paramagnetic materials with magnetic permeability of less than 1.01.

23. Mechanical movement (1) according to claim 4, **characterized in that** the passive indicator element (2) is made of one or more magnetostrictive materials.

24. Mechanical movement (1) according to claim 4, **characterized in that** the passive indicator element (2) is made in a material having a low temperature dependence.

25. Mechanical movement (1) according to claim 24, **characterized in that** the passive indicator element (2) is made in an auto-compensated temperature material.
